# FASCICULE DE BREVET EUROPEEN

(11) **EP 1 349 306 B1**
(45) Date de publication et mention de la délivrance du brevet: **16.10.2013**
(21) Numéro de dépôt: 03005220.3
(22) Date de dépôt: 10.03.2003
(51) Int. Cl.: H04J 3/06, H04B 1/38

(54) **Procédé de transmission d'information entre deux unités munies chacune de moyens d'émission et de réception de signaux**
Nachrichtenübertragungsverfahren zwischen zwei Einheiten , beide mit Sende - und Empfangsmodi
Method of transmitting information between two units each capable of transmitting and receiving signals

(30) Priorité: 25.03.2002 EP 02076153
(43) Date de publication de la demande: 01.10.2003
(73) Titulaire: ASULAB S.A., 2074 Marin (CH)
(72) Inventeur: Guanter, Jean-Charles, 2517 Diesse (CH); Bernasconi, Ermanno, 2000 Neuchâtel (CH); Xu, Ming, Verdun (Montréal) QC, H4G 3C4 (CA)
(74) Mandataire: Ravenel, Thierry Gérard Louis

(56) Documents cités:
- EP-A- 0 957 589
- US-A- 5 801 664
- US-A- 5 943 376
- US-A1- 2001 038 650

## Description

La présente invention concerne un procédé de transmission d'information entre au moins deux unités constituées de deux stations d'ordinateur ou de deux objets portables personnalisés, ou d'un objet portable personnalisé et d'une station d'ordinateur. L'objet portable est par exemple une montre personnalisée. Pour la mise en oeuvre du procédé, l'objet portable, tel que la montre, et la station d'ordinateur comprennent chacun des moyens d'émission et/ou de réception de signaux, qui sont enclenchés alternativement dans un mode d'émission et un mode de réception. Les signaux transmis, de préférence des signaux radiofréquences courte distance, sont composés notamment d'au moins une trame d'information modulée sur une porteuse choisie parmi plusieurs porteuses à disposition dans la station d'ordinateur et/ou dans la montre. L'information de la trame concerne par exemple des données à mémoriser dans une mémoire de la montre ou des données de la mémoire à transmettre à la station d'ordinateur. Cette information peut concerner également des commandes d'exécution d'opération ou des demandes d'identification de la source émettrice.

Les données de la mémoire ou les données à mémoriser dans la mémoire sont de préférence des données d'une fonction agenda. Lorsque cette fonction agenda est opérationnelle, il est possible de consulter des fiches de données préalablement enregistrées en activant certaines touches de la montre dans différents menus. Les différents menus de cette fonction agenda concernent des notes, un répertoire d'adresses, un agenda, une transmission de données par signaux radiofréquences et des paramètres. Un des menus de cette fonction agenda concerne un mode de transmission des données. Dans ce mode de transmission sélectionné, des données de la mémoire de la montre sont transmises vers la station d'ordinateur ou reçues de la station d'ordinateur. Quand ce menu est sélectionné, il n'est en principe plus possible d'utiliser d'autres fonctions agenda de la montre jusqu'à ce que la phase de transmission soit terminée.

Le transfert de données entre une station d'ordinateur et une montre électronique par des signaux radiofréquences courte-distance est déjà connu. On peut citer à ce titre la demande de brevet européen EP 0 957 589 au nom de la Demanderesse. Dans cette demande de brevet, il est décrit un système de communication entre des première et deuxième unités. Les unités comprennent chacune des moyens d'émission et/ou de réception de signaux radiofréquences courte-distance pour la transmission bidirectionnelle de données. La première unité est de préférence une montre électronique personnalisée, alors que la deuxième unité est une station d'ordinateur. La montre électronique avec ces moyens d'émission et/ou de réception de signaux doit se trouver dans une zone d'action déterminée de la station d'ordinateur pour un échange de données.

Une fois qu'il est choisi d'établir une communication depuis la station d'ordinateur, les moyens d'émission et/ou de réception de la montre doivent être actifs au moins par période d'émission et/ou de réception des signaux radiofréquences.

Les données transférées sont de préférence des données d'une fonction agenda. Ces données sont transférées par paquets d'information contenus chacun dans une trame d'information modulée sur une porteuse haute fréquence. La taille de chaque paquet transmis dépend de la taille déterminée d'une page d'une mémoire non volatile de la montre. Pour un transfert complet de l'information, plusieurs trames d'information doivent donc être transmises.

Dans cette demande de brevet, plusieurs stations d'ordinateurs peuvent communiquer chacune avec une montre personnalisée respective dans une même zone d'action. Pour ce faire, il est prévu que la transmission de signaux de données entre chaque station et une montre personnalisée respective soit faite sur une porteuse haute fréquence différente des porteuses de transmission entre les autres stations et les autres montres personnalisées. Le choix d'une porteuse sur laquelle sont modulés les signaux de données est fait par exemple dans la station d'ordinateur en fonction d'un protocole anti-collision bien connu de manière à ne pas perturber la transmission de signaux de données entre d'autres stations et d'autres montres.

Dans cette demande EP 0 957 589, il n'est pas prévu de limiter la consommation de la montre pendant la phase de transmission bidirectionnelle de données de la fonction agenda ce qui est un inconvénient majeur. Comme la montre électronique est un instrument de petit volume qui est alimenté par une source d'énergie à faible puissance, il est nécessaire d'optimiser le temps de transmission de toutes les données nécessaires entre la station d'ordinateur et la montre. Cette optimisation devrait être suffisante pour limiter le temps de fonctionnement des moyens d'émission et/ou de réception de la montre qui consomment beaucoup d'énergie.

Dans le brevet US 5,943,376, il est décrit un procédé et un dispositif pour l'alignement d'une trame d'information dans un système de réseau cellulaire, qui comprend notamment au moins un poste de base et au moins un poste mobile susceptible d'établir une communication téléphonique. Pour ce faire, la trame d'information de la parole numérisée à transmettre est générée par un vocodeur. La structure de cette trame d'information est déterminée en tenant compte de coordonnées dans le temps pour éviter toute interférence avec différents sites de communication. Un paramètre d'alignement de trame, par exemple défini par 3 bits, est transmis pour indiquer un nombre de séquences de trame à transmettre, avant d'aligner le temps de trame. Dans ladite trame définie avec un nombre de bits déterminé, il est prévu un mot de synchronisation de longueur variable pour tenir compte du retard ou de l'avance dans la transmission. Ce mot de synchronisation est court ou long pour avancer ou retarder les trames afin de les aligner dans le temps. Cependant rien dans ce procédé ne permet de réduire le temps de transmission de toutes les données, ainsi que le temps d'enclenchement des moyens d'émission et/ou de réception de chaque unité du réseau cellulaire.

Un but de l'invention est de pallier les inconvénients de l'art antérieur en proposant un procédé de transmission d'information sans fil entre deux unités, telles qu'une montre électronique et une station d'ordinateur, afin de réduire le temps de transmission de toutes les données. Le temps d'enclenchement des moyens d'émission et/ou de réception est également réduit notamment pour au moins une des unités, telle que la montre. Cette réduction du temps de transmission est dépendante de la qualité de la transmission et de l'état de la source d'alimentation de chaque unité. Ainsi, la taille de certaines parties de chaque trame d'information doit pouvoir varier dynamiquement en fonction de la qualité de la transmission.

A cet effet, l'invention a pour objet un procédé de transmission d'information sans fil entre au moins deux unités constituées de deux stations d'ordinateur ou de deux objets portables personnalisés, ou d'un objet portable personnalisé et d'une station d'ordinateur cité ci-devant, qui se caractérise en ce qu'il comprend les étapes consistant à :
- transmettre alternativement d'une unité à l'autre unité une trame d'information modulée sur la porteuse sélectionnée d'une unité à l'autre unité, chaque trame comprenant un champ de synchronisation constitué d'un nombre déterminé d'octets de valeur identique, et un paquet d'information;
- compter des octets de valeur identique du champ de synchronisation de la trame reçue, et
- comparer le nombre d'octets comptés avec un nombre seuil déterminé de manière à transmettre une indication pour corriger dynamiquement en fonction de la qualité de transmission le nombre d'octets du champ de synchronisation d'une prochaine trame à recevoir.

Un avantage du procédé de transmission d'information, selon l'invention, est qu'il permet de gagner du temps de transmission d'information entre une première unité et une seconde unité grâce à la variation dynamique de la taille du champ de synchronisation. Une surveillance, que toutes les données sont transmises, est effectuée en évitant le maximum d'erreurs de transmission. Le protocole mis en oeuvre doit donc permettre de transmettre un maximum d'information en un minimum de temps. Dans le cas où la transmission est de bonne qualité, la taille du champ de synchronisation peut être réduite à une taille minimum, alors que quand la transmission est de moins bonne qualité, cette taille est adaptée afin que toutes les données puissent être transférées sans problème d'une unité à l'autre.

Si la taille du champ de synchronisation ne variait pas, il serait nécessaire que cette taille soit suffisamment grande pour assurer la transmission de l'information dans les cas les plus critiques. Cette taille fixe pénaliserait la durée de transmission d'information entre les deux unités.

Comme une des unités est constituée de préférence par une montre électronique personnalisée, la taille du champ de synchronisation va dépendre par exemple du temps de commutation entre le mode d'émission et le mode de réception des signaux radiofréquences par la montre. De plus, le temps de commutation dépend du niveau de tension de la pile ou de l'accumulateur qui alimente les éléments électroniques de la montre. Il est bien clair que plus ce niveau de tension devient bas, et plus la taille du champ de synchronisation doit être importante.

Avant de tirer l'information de chaque trame, il est nécessaire que chaque unité arrive à compter au moins un nombre minimum d'octets de synchronisation, par exemple au moins trois octets de valeur identique, ainsi que deux octets supplémentaires de même valeur par mesure de sécurité. Le compte des octets du champ de synchronisation reçu est réalisé quand l'unité a pu se verrouiller sur une porteuse haute fréquence sélectionnée des signaux radiofréquences.

Dans un mode préféré de réalisation, il peut être prévu dans l'unité constituée par la station d'ordinateur d'élargir ou de diminuer la taille des données transférées à l'objet portable, tel que la montre. Cette taille est de préférence définie par la dimension des pages de données à mémoriser dans une mémoire non volatile de la montre, par exemple de 64 octets. Si une erreur de transmission a été constatée, il est nécessaire de répéter la transmission de la trame d'information qui n'a pas passé. Ainsi plus le nombre d'erreurs de transmission constaté par la station est important, plus le temps de transmission de toutes les données sera important. De ce fait, un ajustement de la taille de données à transférer peut être effectué dans la station d'ordinateur pour pallier à ces erreurs. Un optimum en fonction de la qualité de transmission doit être trouvé.

Dans un mode préféré de réalisation, la station d'ordinateur transmet des trames de données formatées de telle manière à permettre un enregistrement compatible avec la mémoire non volatile de l'objet portable, tel que la montre. Les adresses de lecture ou d'écriture de la mémoire sont transférées dans les trames d'information provenant de la station d'ordinateur. Ceci évite à la réception des trames d'information dans le bloc de gestion de données de la montre de rechercher les adresses mémoire pour la lecture ou l'enregistrement de données. Ainsi, un gain de temps de lecture ou d'écriture de ladite mémoire est obtenu.

Les buts, avantages et caractéristiques du procédé de transmission d'information sans fil entre deux unités apparaîtront mieux, de manière non limitative, dans la description suivante en regard des dessins sur lesquels :
- la figure 1 représente une installation avec une station d'ordinateur et une montre personnalisée pour la mise en oeuvre du procédé de transmission d'information sans fil selon l'invention;
- la figure 2 représente schématiquement différents blocs électroniques de l'installation de la figure 1 pour la transmission d'information selon l'invention;
- la figure 3 représente schématiquement un diagramme temporel de l'agencement des trames d'information transmises entre la station d'ordinateur et la montre personnalisée pour le procédé de transmission selon l'invention;
- la figure 4 représente une trame d'information qui est modulée sur une porteuse haute fréquence des signaux radiofréquences pour le procédé de transmission selon l'invention;
- la figure 5 représente un organigramme général d'étapes de procédé au niveau de la station d'ordinateur pour la transmission d'information selon l'invention;
- la figure 6 représente un organigramme d'étapes de recherche d'une porteuse ou canal de transmission libre, pour la station d'ordinateur, du procédé de transmission d'information selon l'invention;
- la figure 7 représente un organigramme d'étapes pour la communication d'information de la station d'ordinateur du procédé de transmission d'information selon l'invention;
- la figure 8 représente un organigramme général d'étapes au niveau de la montre du procédé de transmission d'information selon l'invention;
- la figure 9 représente un organigramme d'étapes de la recherche de la porteuse ou du canal de transmission, pour la montre, du procédé de transmission d'information selon l'invention;
- la figure 10 représente un organigramme d'étapes pour la communication d'information de la montre du procédé de transmission d'information selon l'invention, et
- la figure 11 représente un organigramme d'étapes de transfert d'information de la montre du procédé de transmission d'information selon l'invention.

La description suivante est relative à un procédé de transmission d'information sans fil entre deux unités munies chacune de moyens d'émission et/ou de réception de signaux. Les signaux sont par exemple des signaux radiofréquences courte-distance. Les unités sont de préférence constituées par une station d'ordinateur et par une montre électronique. Toutefois, il est également possible d'imaginer la transmission d'information selon le procédé de l'invention entre deux stations d'ordinateur ou deux objets portables, tels que deux montres.

Comme de multiples types d'information peuvent être transmis selon le procédé de l'invention, il ne sera fait référence dans la suite de la description de préférence à la transmission d'information relative à une fonction agenda d'une montre électronique et d'une station d'ordinateur. Il peut s'agir de la transmission de données de différents menus disponibles de la fonction agenda, tels que des menus notes, adresses, agenda et paramètres.

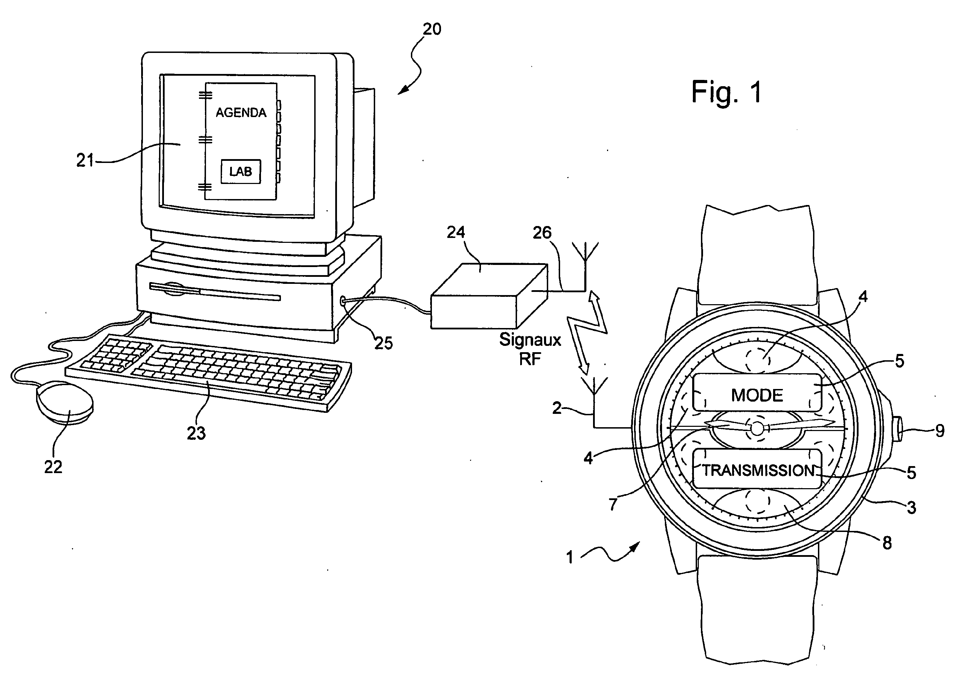

Dans l'exemple représenté à la figure 1, l'installation pour la mise en oeuvre du procédé de transmission d'information sans fil comprend deux unités constituées par une montre électronique agenda 1 et une station d'ordinateur 20. La station d'ordinateur 20 est composée pour l'essentiel d'un clavier 23, d'une souris 22 et d'un écran 21 sur lequel peuvent être affichées toutes les données de la fonction agenda. L'agenda personnalisé, qui apparaît sur l'écran 21 de la station d'ordinateur, peut être une réplique d'un agenda traditionnel de bureau pour faciliter sa manipulation. Il est en principe ouvert dès qu'un mot de passe personnel a été introduit. Toutes les pages de cet agenda peuvent être tournées sur l'écran à l'aide du clavier 23 ou de la souris 22 selon un pointeur désignant un curseur ou un onglet sur le bord de l'agenda. Dès qu'un type de fiches de l'agenda a été sélectionné notamment par l'onglet correspondant, l'agenda s'ouvre sur l'écran à la page correspondante pour montrer notamment tous les champs mémorisés. Chaque champ de messages peut comprendre par exemple jusqu'à 63 caractères alphanumériques.

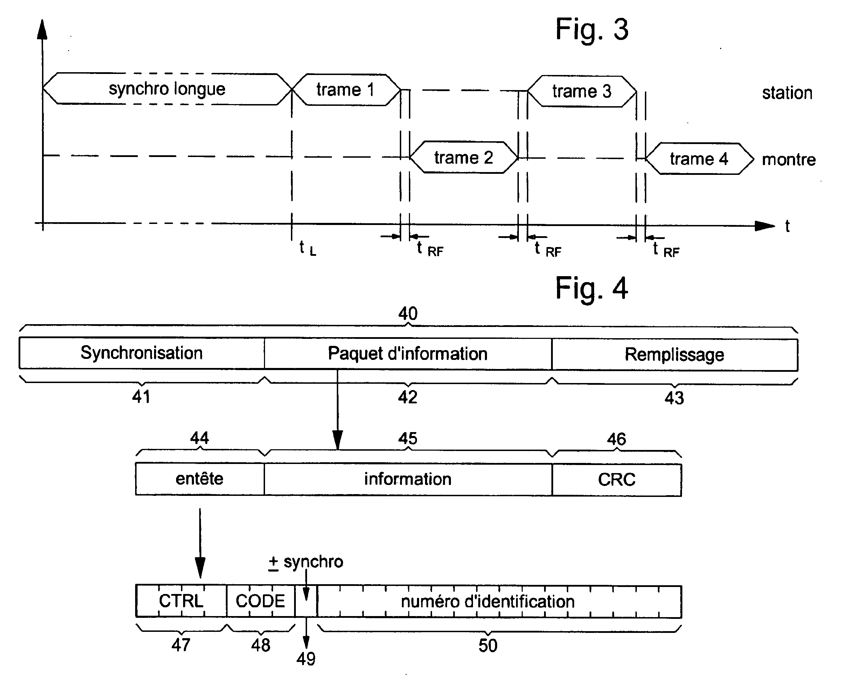

La station d'ordinateur 20 comprend encore un boîtier périphérique 24, qui est relié par un câble 25 du type USB ou autre à une entrée de la station d'ordinateur. Ce boîtier 24 comprend des moyens d'émission et/ou de réception de signaux radiofréquences courte distance avec une antenne 26 pour la station d'ordinateur 20. Il est bien clair que ces moyens d'émission et/ou de réception de la station d'ordinateur, dans une variante d'exécution, peuvent être également intégré dans la partie principale de ladite station. La montre 1 comprend également des moyens d'émission et/ou de réception de signaux radiofréquences courte distance avec une antenne 2 pour la transmission bidirectionnelle d'information dans une zone d'action de la station d'ordinateur. Les deux unités avec leurs moyens d'émission et/ou de réception permettent de mettre en oeuvre le procédé de transmission d'information selon l'invention qui est expliqué ci-dessous en référence aux figures 3 à 11.

Dans l'exemple présenté à la figure 1, la montre-bracelet 1 est du type analogique avec un cadran 8, des aiguilles 7 d'indication de l'heure, un mouvement horloger disposé dans un boîtier 3 sous le cadran 8, deux affichages à cristaux liquides 5 de type matriciel pour afficher notamment l'information de la fonction agenda, des touches de commande 4 sur la face intérieure du verre et un bouton de commande 9 sur le boîtier. Une pile ou un accumulateur, non représenté, dans le boîtier 3 permet de fournir l'alimentation électrique aux composants électroniques de la montre. Les touches de commande 4 sont de préférence des capteurs de type capacitif qui peuvent être activés individuellement chacun par un doigt d'un utilisateur posé dans une zone déterminée du capteur à activer. Cependant, il est bien clair qu'une montre à affichage de l'heure de façon digitale disposant par exemple de boutons de commande sur le boîtier pour l'activation des diverses fonctions de la montre peut aussi être envisagée.

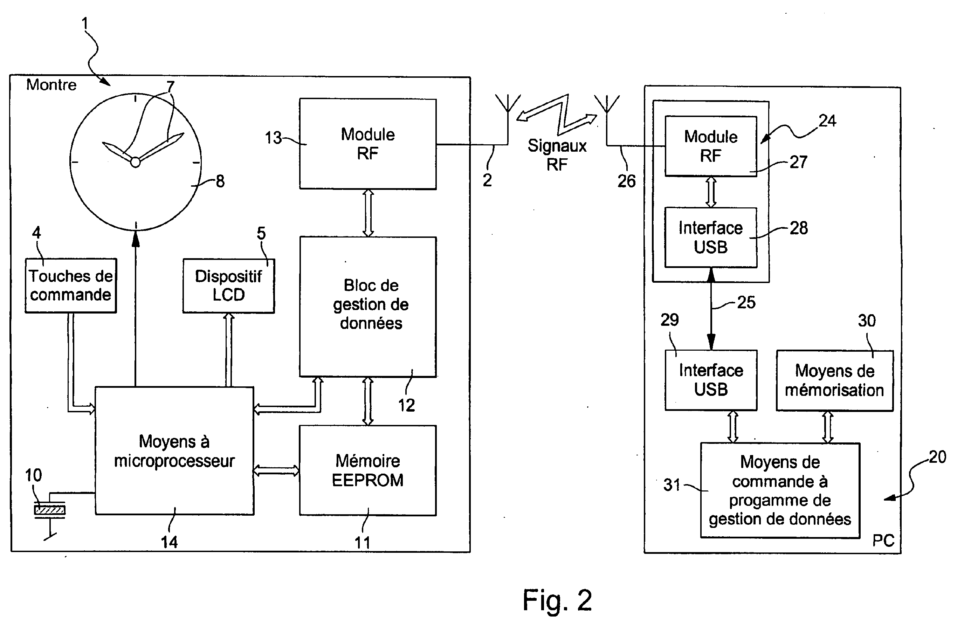

A la figure 2, différents éléments de la montre personnalisée 1 et de la station d'ordinateur 20 sont représentés schématiquement pour la mise en oeuvre du procédé de transmission bidirectionnelle d'information selon l'invention. La montre 1 comprend notamment des moyens à microprocesseur 14 programmés pour la gestion de la fonction agenda sur la montre. Ces moyens à microprocesseur 14 comportent également certains modules en relation avec la base de temps pour la commande de l'affichage de l'heure par les aiguilles 7 sur le cadran 8 de montre. Un étage oscillateur relié à un cristal de quartz 10 est disposé dans les moyens à microprocesseur 14 pour cadencer différentes opérations de la montre. La fréquence d'oscillation est de l'ordre de 32,768 kHz.

Le microprocesseur desdits moyens 14 peut être par exemple le microprocesseur PUNCH à 8-bit fabriqué par la société EM Microelectronic-Marin SA en Suisse.

Une fois que la fonction agenda a été enclenchée, notamment en pressant le bouton de commande, les touches de commandes 4 peuvent être activées pour fournir des signaux aux moyens à microprocesseur 14. Ces signaux provenant des touches 4 concernent notamment la sélection de différents menus de la fonction agenda, ainsi que pour l'édition de données à mémoriser dans la mémoire non volatile EEPROM 11. Tant que le mode de transmission n'a pas été activé par une des touches 4, il est possible de visualiser toutes les données ou paramètres mémorisés ou édités sur le ou les affichages à cristaux liquides 5.

Les moyens à microprocesseur 14 sont connectés à un bloc de gestion de données 12 qui est chargé de gérer toutes les opérations de transfert ou de réception d'information avec la station d'ordinateur en coopération avec les moyens d'émission et/ou de réception. Les moyens d'émission et/ou de réception de la montre 1 sont constitués par le module RF 13 et l'antenne 2. Ces moyens d'émission et/ou de réception ne seront pas expliqués en détail car il font partie des connaissances générales d'un homme du métier dans ce domaine technique.

Quand le mode de transmission est sélectionné, le bloc de gestion de données 12 impose un blocage des autres fonctions agenda de la montre. Dans ce mode de transmission, le bloc de gestion peut lire ou écrire des données reçues, directement dans la mémoire non volatile 11 indépendamment des moyens à microprocesseur 14. Ce bloc de gestion 12 est cadencé par des signaux d'horloge provenant de l'oscillateur horloger. Ainsi, il est avantageux d'utiliser la fréquence de l'oscillateur horloger pour la modulation de l'information sur une porteuse haute-fréquence sélectionnée pour la transmission bidirectionnelle d'information (32768 bauds).

Pour la transmission d'information relative notamment à une fonction agenda, la station d'ordinateur 20 comprend des moyens de commande à programme de gestion de données 31 reliés à des moyens de mémorisation 30. Ces moyens 31 permettent par l'action de la souris ou du clavier de visualiser sur l'écran de la station 20 notamment toutes les opérations à effectuer. La station d'ordinateur 20 comprend également un boîtier 24 périphérique qui comprend les moyens d'émission et/ou de réception des signaux radiofréquences qui sont constitués pour l'essentiel d'un module RF 27 et d'une antenne 26. Une interface USB 29, dans la partie principale de la station d'ordinateur 20 et une autre interface USB 28 dans le boîtier sont reliés par le câble 25 pour la conversion des signaux provenant des moyens 31 ou du module RF 27.

Pour établir une communication avec une montre personnalisée 1, la station d'ordinateur 20 sélectionne au moins un des cinq canaux à disposition qui est normalement le moins perturbé. La montre doit pour sa part se trouver dans une zone d'action de la station d'ordinateur et un mode de transmission de la montre doit être sélectionné pour répondre à l'appel personnalisé. Bien entendu, ladite montre ne répond à la station d'ordinateur qu'au moment où elle a pu se verrouiller sur le canal de transmission sélectionné par la station, et qu'elle a pu reconnaître notamment son numéro d'identification comme expliqué ci-après.

Chaque canal de transmission correspond à une porteuse haute fréquence déterminée qui se situe par exemple autour de 434 MHz. Une synchronisation modulée sur la porteuse sélectionnée est nécessaire pour la transmission bidirectionnelle de données. Cette synchronisation est gérée par la station d'ordinateur de manière à décharger la montre de diverses tâches coûteuses en énergie.

Les avantages du procédé de transmission selon l'invention vont être expliqués de manière plus détaillée ci-dessous en référence aux figures 3 à 11. Dans chaque unité, les moyens d'émission et de réception sont commutés alternativement en mode d'émission et en mode de réception. Plusieurs trames d'information, modulées sur une porteuse sélectionnée, sont donc émises alternativement de chaque unité comme expliqué ci-dessous en référence tout d'abord aux figures 3 et 4.

Comme la montre comprend une mémoire non volatile de type EEPROM, les données de cette mémoire sont transmises ou reçues par page de mémoire fixée par défaut à 64 octets dans chaque trame d'information. Toutefois, la taille de données à transmettre peut être fixée à 32, 64, 128 ou 256 octets, notamment par la station d'ordinateur. De ce fait, les moyens d'émission et/ou de réception de chaque unité doivent être commutés alternativement dans un mode d'émission et dans un mode de réception jusqu'au terme de l'information complète à transmettre. Bien entendu, il est plus avantageux de transmettre des trames d'information avec la taille de données la plus grande possible, mais un optimum doit être trouvé de manière à ne pas devoir retransmettre la trame en cas d'erreur détectée dans l'unité réceptrice.

Dans un premier temps, la station d'ordinateur doit chercher le contact avec la montre personnalisée avec laquelle elle veut communiquer. Pour ce faire, la station d'ordinateur sélectionne un canal de transmission parmi cinq canaux de transmission disponibles actuellement. L'information modulée sur la porteuse sélectionnée comprend notamment une synchronisation nécessaire pour la reconnaissance des données transmises pour le procédé de transmission selon l'invention.

Lors de cette première phase de recherche de contact, la station d'ordinateur envoie une longue synchronisation qui peut être de l'ordre de 2,7 sec qui comprend une suite d'octets de même valeur. De préférence, les octets de synchronisation ont une valeur fixée à 81 en hexadécimal ce qui correspond en binaire à 10000001 de manière à ne pas confondre cette valeur notamment avec du bruit. De plus, cela permet de trouver le début d'un octet de synchronisation. Comme la fréquence de l'information modulée sur la porteuse est de l'ordre de 32,768 kHz, cette longue synchronisation comprend donc plus de 11000 octets de même valeur. Cette durée t_{L} de synchronisation doit laisser le temps à la montre contactée de parcourir les cinq canaux de transmission pour retrouver le canal de transmission sélectionné par la station d'ordinateur. De plus, cette durée t_{L} tient compte également de la période de repos des moyens d'émission et/ou de réception de la montre qui peut être fixé à 2,5 sec, par économie d'énergie. Pour retrouver le canal de transmission, la montre doit être en mesure de pouvoir compter les octets de synchronisation en parcourant chaque canal de transmission parmi les cinq canaux disponibles actuellement.

Comme montré à la figure 3 en mode d'émission de la station d'ordinateur, la longue synchronisation est suivie directement d'une première trame d'information 40. Cette trame d'information 40 est constituée d'un champ de synchronisation 41 d'une taille variable, d'un paquet d'information 42 et d'au moins deux octets de remplissage 43. Les octets de remplissage sont utilisés principalement pour la commutation des moyens d'émission et de réception du mode d'émission au mode de réception ou inversement. La valeur des octets de remplissage peut être fixée à 00 en hexadécimal de manière à éviter tout conflit avec des données du paquet d'information 42 et la synchronisation.

Dans la mesure où la montre a pu se verrouiller sur le canal de transmission sélectionné par la station d'ordinateur pendant la synchronisation longue ou le champ de synchronisation de la première trame, elle va répondre à la station d'ordinateur par une seconde trame d'information après la commutation de ses moyens d'émission et/ou de réception. La transmission alternée par trames d'information entre les deux unités va ainsi se poursuivre jusqu'à ce que l'information complète soit transférée. Le temps de transmission complète de l'information peut être de quelques minutes. Ce temps dépend par exemple de la quantité de données à transmettre.

Dans le pire des cas lors de la commutation du mode d'émission au mode de réception dans chaque unité, le temps de commutation t_{RF} des moyens d'émission et/ou de réception est inférieur à 20 ms. Dans le cas de la montre, cette commutation est relativement lente par rapport à la station d'ordinateur, car elle est alimentée par une pile ou un accumulateur, alors que la station d'ordinateur est reliée au réseau d'alimentation. Cette vitesse de commutation dépend donc de la source d'alimentation électrique.

Il est à noter que la station d'ordinateur va émettre pendant un certain nombre de fois cette synchronisation longue suivie de la première trame, jusqu'à ce que l'utilisateur réagisse et place sa montre en mode de transmission pour répondre à la première trame reçue. L'espace entre chaque répétition de la synchronisation longue et de la première trame est de l'ordre de 130 ms. Le temps maximum d'attente de réponse de la montre peut être fixé par exemple à 45 sec.

Un des avantages du procédé selon l'invention est de pouvoir varier dynamiquement la taille de la synchronisation 41 qui dépend notamment de cette vitesse de commutation RF et de la qualité de la transmission. Pour cela à la réception de la trame d'information 40, le nombre d'octets de synchronisation est compté par exemple par un compteur dans le bloc de gestion de données de la montre ou dans les moyens de commande à programme de gestion de la station d'ordinateur. Il est nécessaire de pouvoir compter au moins 3 octets de synchronisation dans chaque trame ainsi que 2 octets supplémentaires de sécurité. Si le nombre d'octets de synchronisation compté est plus grand que les 5 octets de synchronisation minimum, alors une indication est envoyée à l'émetteur pour réduire la taille du champ de synchronisation d'au moins un octet. Par contre si le nombre d'octets comptés est inférieur au nombre minimum de 5 octets, une indication est envoyée à l'émetteur pour augmenter la taille du champ de synchronisation d'au moins un octet, de préférence de 3 octets. Il en est de même si aucune réponse n'est reçue, ce qui peut signifier que la synchronisation est trop courte.

Il est à noter qu'au début de l'essai de contact entre la station d'ordinateur et la montre, le nombre d'octets du champ de synchronisation 41 des trames d'information 40 peut être fixé par exemple à 25 octets par sécurité.

L'indication pour la variation de la taille de synchronisation est placée dans une entête 44 du paquet d'information 42 de chaque trame d'information 40. Ce paquet d'information 42 comprend à la suite de l'entête 44, un champ de l'information utile 45 et un champ de contrôle cyclique de redondance 46 défini par l'abréviation CRC. Ce code CRC 46, bien connu, sert avant tout pour contrôler une erreur de transmission de l'information précédente. Si une erreur survient, la trame d'information doit à nouveau être transmise à l'unité réceptrice par l'unité émettrice.

Dans l'entête 44 composée de 3 octets, le premier octet comprend 4 bits de contrôle 47, 3 bits de code 48 concernant le type d'information transmise, et une indication 49 relative à la taille du champ de synchronisation 41 reçu. Les deux derniers octets de l'entête concernent les deux derniers octets du numéro d'identification de la montre. Il est à noter que les 4 bits de contrôle 47 doivent être égaux à l'inverse des 3 bits de code 48 et de l'indication 49 pour qu'aucune erreur ne soit détectée. Cette indication 49 vaut 1 si la taille du champ de synchronisation 41 reçu est trop courte, et 0 si la taille du champ de synchronisation 41 reçu est trop longue.

Si le numéro d'identification d'une montre personnalisée n'est pas connu par la station d'ordinateur, la première trame émise par ladite station comprend un numéro générique, par exemple 0000 en hexadécimal. Une fois que la montre s'est verrouillée sur le canal de transmission sélectionné par la station d'ordinateur, elle transmet une trame avec son numéro d'identification à la station d'ordinateur. Ainsi, ce numéro d'identification d'une nouvelle montre personnalisée peut être mémorisé dans la station d'ordinateur. Comme indiqué ci-dessus dans le cas où plusieurs stations d'ordinateur essaient de communiquer chacune avec une montre personnalisée correspondante dans une même zone d'action, le principe anti-collision est utilisé. De ce fait, chaque montre ne répond à une des stations que si elle a reconnu son propre numéro d'identification. Les canaux de transmission sélectionnés de chaque couple formé par une station d'ordinateur et une montre sont différents pour éviter des problèmes de transfert d'information.

Les différents types de code 48 d'information transmis d'une unité à l'autre unité sont définis dans les tableaux ci-dessous. Le premier tableau I concerne les codes de l'information transmise de la station d'ordinateur vers la montre, alors que le second tableau II concerne les codes de l'information transmise de la montre vers la station d'ordinateur.

**Tableau I :**

| Code | Nom. | Description |
|---|---|---|
| 1 0 0 | UPLOAD | Transfert de données vers la montre |
| 1 0 1 | DOWNLOAD | Demande de transfert de la montre |
| 1 1 0 | CONTINUE READ | Demande de la suite des données de la montre |
| 1 1 1 | NUMERO ID | Demande du numéro d'identification de la montre |
| 1 1 1 | DATA LENGTH | Nombre de données par champ de données |
| 0 0 0 | END | Fin de la transmission |

**Tableau II :**

| Code | Nom | Description |
|---|---|---|
| 0 0 1 | DATAS DOWNLOAD | Transfert de données vers la station |
| 1 0 1 | ACKNOWLEDGE | Confirmation de réception correcte |
| 1 1 0 | NO ACKNOWLEDGE | Annonce de réception incorrecte |
| 1 1 1 | NUMERO ID | Retour du numéro d'identification montre |
| 0 0 0 | END | Fin de la transmission |

Lors de l'établissement d'une communication entre la station d'ordinateur et la montre électronique personnalisée, toutes les trames d'information comprennent une entête dans laquelle le code spécifie le type d'information à transmettre comme décrit dans les tableaux ci-dessus. Il peut être sélectionné ou programmé notamment le type de transfert de données dans la station d'ordinateur. Il peut s'agir d'un transfert de la station vers la montre avec synchronisation (lecture/écriture), d'un transfert de la montre vers la station avec synchronisation (lecture) ou d'un transfert écrasant de la station vers la montre (écriture).

Comme c'est la station d'ordinateur qui va gérer les opérations relatives au transfert des données de la mémoire non volatile de la montre, la station va transmettre à la montre directement les adresses mémoire sur les signaux radiofréquences. Ainsi à la réception desdits signaux radiofréquences dans la montre, les adresses mémoire peuvent directement pointer aux endroits spécifiques de la mémoire par l'entremise du bloc de gestion de données de la montre. En formatant les adresses mémoire à envoyer sur les signaux radiofréquences depuis la station d'ordinateur pour la lecture ou l'écriture des données dans la mémoire de la montre, une simplification des opérations à traiter directement dans la montre est réalisée. Ceci permet donc d'économiser la consommation de la pile ou de l'accumulateur de ladite montre. Le traitement de ces données dans le bloc de gestion de données peut ainsi se faire à une fréquence inférieure à 40 kHz. Auparavant, il était nécessaire d'avoir un bloc de gestion plus complexe cadencé à une fréquence de l'ordre de 512 kHz pour traiter les signaux reçus sans information relative aux adresses mémoire.

Dans les premières étapes du procédé de transmission d'information, des données concernant la page 0 de la zone statique de la mémoire EEPROM sont transmises. De cette façon, la station d'ordinateur peut prendre connaissance notamment de l'emplacement de la dernière donnée de la zone dynamique de ladite mémoire et de différents paramètres. Le pointeur de la zone vide mémorisé dans la zone statique de la mémoire permet de définir un nombre effectif de pages de données de la mémoire à transmettre.

Après avoir pris connaissance des différents paramètres mémorisés dans la mémoire de la montre notamment dans cette page 0, il est possible par exemple d'opérer une lecture des données de la mémoire. Dans ce cas, la station d'ordinateur transmet une trame 40 dans laquelle le code 101 (DOWNLOAD) est spécifié. A la suite de cette entête, le paquet d'information 42 comprend un champ d'adresses d'écriture de 3 octets, un champ d'ordre de lecture d'un octet, et un champ de contrôle CRC. La montre va transmettre en réponse, après commutation des moyens d'émission et/ou de réception de la montre, l'information de la décharge de données vers la station d'ordinateur par le code 001 (DATAS DOWNLOAD) dans l'entête 44 du paquet 42 de la trame réponse 40. Le paquet d'information comprend à la suite de l'entête réponse un champ d'information du nombre de données transmises et un champ de contrôle CRC.

A la suite de sa trame de demande de lecture, la station d'ordinateur va envoyer une trame avec une entête 44 contenant le code 110 (CONTINUE READ) pour demander de continuer la lecture. Dans ce cas, uniquement l'ordre de lecture est envoyé vers la montre pour la suite de la lecture des données mémoire, car la montre incrémente son pointeur interne sans tenir compte de la notion de pages. Tant qu'aucun problème ne survient lors du transfert, la montre envoie des trames réponses avec le code 001 dans l'entête.

A la fin du transfert d'information, une trame d'information avec le code 000 (END) de fin de transmission est envoyée de la station d'ordinateur vers la montre et confirmée par la montre vers la station d'ordinateur. Dès cet instant, les moyens d'émission et/ou de réception de la montre sont éteints et les autres fonctions agenda peuvent à nouveau être utilisées.

Dans le cas d'une écriture de la mémoire avec des données de la station d'ordinateur, la trame initiale d'information envoyée par la station d'ordinateur comprend le code 100 (UPLOAD) de chargement de données dans la montre. Lors des opérations d'écritures de la mémoire par des données provenant de la station d'ordinateur, la montre transmet à la station d'ordinateur soit une trame d'information 40 avec le code 010 (ACKNOWLEDGE) si la transmission a été reçue correctement, soit une trame d'information 40 avec le code 011 (NO ACKNOWLEDGE) si une erreur est survenue lors de la transmission. Dans ce dernier cas, la station d'ordinateur transmet la même trame d'information jusqu'à ce que la montre valide la réception par le code 010.

A la fin du transfert d'information comme précédemment décrit, une trame d'information de fin de transmission est envoyée de la station vers la montre et de la montre vers la station afin d'interrompre notamment les moyens d'émission et/ou de réception de la montre.

Si un nombre important d'erreurs de transmission est constaté par la station d'ordinateur, la taille du champ de données peut être réduit par exemple de 64 octets à 32 octets comme décrit ci-dessus. Dans ce cas, la station d'ordinateur envoie une trame d'information avec le code 111 (DATA LENGTH) pour spécifier à la montre la taille du champ de données.

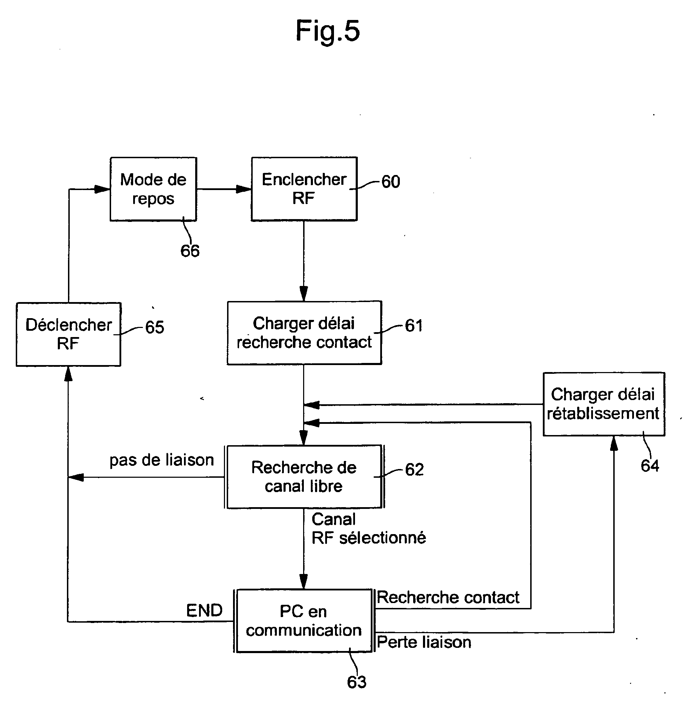

En référence aux figures 5 à 11 suivantes, différentes opérations du procédé de transmission d'information sans fil entre les deux unités sont décrites de la station d'ordinateur vers la montre et de la montre vers la station d'ordinateur. Dans ces figures, les rectangles définissent l'exécution d'une fonction. Les hexagones définissent l'exécution d'une fonction sous la supervision d'un délai à disposition. Les losanges définissent une condition. Les rectangles tronqués dans les coins définissent des messages apparaissant par exemple sur un dispositif d'affichage. Finalement, les rectangles avec une double ligne sur deux côtés opposés définissent l'exécution d'une sous-routine.

La figure 5 représente un organigramme général d'étapes du procédé au niveau de la station d'ordinateur pour la transmission d'information. Pour établir une communication, les moyens d'émission et/ou de réception de la station d'ordinateur sont enclenchés à l'étape 60. A la suite de cette étape 60, il est chargé un délai de recherche de contact, par exemple un délai de 45 sec, à l'étape 61. Dès cet instant, une recherche d'un canal de transmission libre peut être opéré à l'étape 62. Une fois qu'un canal de transmission libre a pu être sélectionné, la station d'ordinateur peut établir la communication à l'étape 63. A cette étape 63, il se peut que la montre n'a pas répondu à la station d'ordinateur. Dans ce cas, la recherche de contact est à nouveau lancée tant que le délai de l'ordre de 45 sec n'est pas terminé, et une recherche de canal est relancée à l'étape 62.

Pendant la communication de la station d'ordinateur, il se peut également qu'une perte de liaison momentanée a été constatée. Un rétablissement de contact à l'étape 64 est fait. Le temps de rétablissement de contact est en général inférieur au temps de recherche de contact, par exemple de l'ordre de 30 sec, car il n'y a pas besoin de laisser le temps à l'utilisateur de remettre sa montre dans le mode de transmission.

Une fois que l'information complète a été échangée entre la station d'ordinateur et la montre, la station d'ordinateur envoie une trame de fin de transmission END à la montre et les moyens d'émission et/ou de réception sont déclenchés à l'étape 65 avant de mettre ces moyens dans un mode de repos à l'étape 66.

La sortie "pas de liaison" correspond au "délai de recherche expiré", c'est-à-dire à la fin des 45 sec ou 30 sec. Si aucun canal n'est libre, on utilise tout de même le moins perturbé.

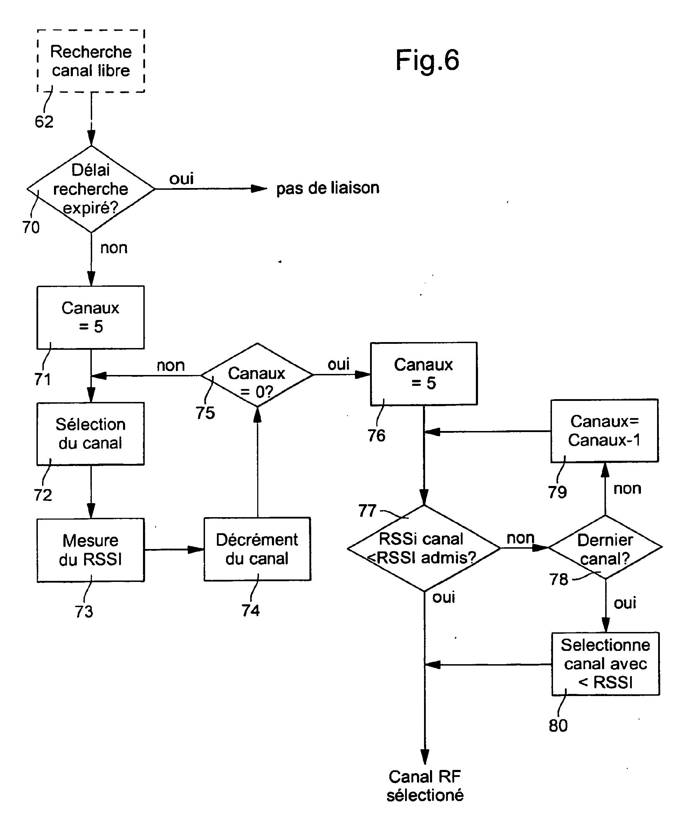

A la figure 6, les étapes de recherche d'un canal libre de transmission 62 depuis la station d'ordinateur sont représentées.

A l'étape 70, il est contrôlé si le délai de recherche est expiré en fonction d'une période de recherche programmée, par exemple de 45 sec. Si ce délai est expiré, il n'y a pas de liaison avec une montre personnalisée dans la zone d'action de la station d'ordinateur et les moyens d'émission et/ou de réception de la station sont déclenchés. Dans le cas contraire, le nombre de canaux à disposition est fixé à 5, et une sélection du canal est opéré à l'étape 72. Une mesure d'un indicateur relatif à la puissance du signal reçu, dénommé RSSI (Received Signal Strength Indicator en terminologie anglaise) est exécutée à l'étape 73 pour le canal sélectionné. A la suite de cette mesure RSSI, on décrémente d'une unité le numéro du canal à chercher à l'étape 74.

A l'étape 75, on contrôle si le nombre de canaux est égal à 0, ce qui signifie que tous les canaux ont été cherchés. Si ce n'est pas le cas, un retour à l'étape 72 est opéré. Lorsque le nombre de canaux décrémenté est égal à 0 à l'étape 75, ce nombre de canaux est ramené à 5 à l'étape 76.

La valeur de la mesure du RSSI du premier des 5 canaux est comparée à un seuil du RSSI admis. Dans le cas où la valeur de la mesure du RSSI est inférieure au seuil RSSI ce qui est souhaité pour une bonne qualité de transmission, alors le canal de transmission est sélectionné pour l'établissement de la communication avec la montre. Dans le cas contraire, on contrôle à l'étape 78 s'il s'agissait du dernier des 5 canaux dont la valeur de la mesure du RSSI a été comparée au seuil admis à l'étape 77. Dans l'affirmative, une sélection du canal ayant la plus faible valeur du RSSI est opérée à l'étape 80 pour la sélection du canal RF de transmission. Par contre, s'il ne s'agit pas du dernier des 5 canaux, alors le numéro du canal est décrémenté d'une unité à l'étape 79. La valeur de mesure du RSSI du nouveau canal choisi après l'étape 79 est comparée au seuil admis à l'étape 77. Ces comparaisons, à l'étape 77, sont opérées jusqu'au dernier des 5 canaux. Il est à noter que l'ordre des 5 canaux testés dans les opérations de recherche d'un canal de transmission est aléatoire de manière à éviter que toutes les stations d'ordinateur sélectionnent de préférence toujours le même canal.

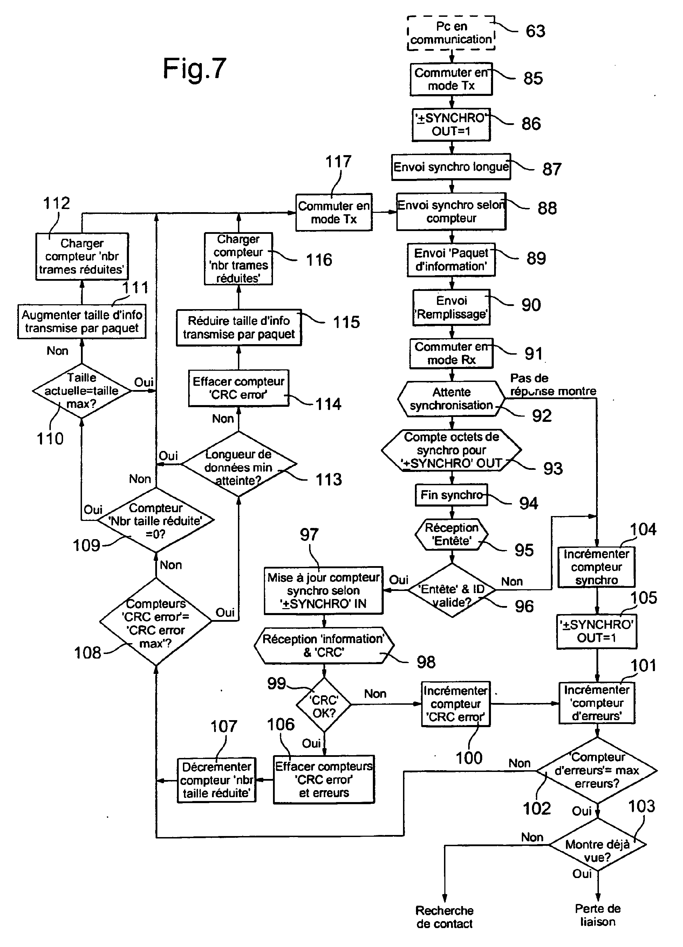

Une fois que le canal de transmission a été sélectionné pour la transmission d'information, la station d'ordinateur entre dans le mode de communication. Différentes étapes sont expliquées en référence à la figure 7 dans ce mode de communication 63 de la station d'ordinateur.

En ayant sélectionné le canal de transmission, les moyens d'émission et/ou de réception de la station d'ordinateur sont commutés dans le mode d'émission Tx à l'étape 85. Une indication de la taille du champ synchronisation de la trame à recevoir dans la station d'ordinateur est fixée à l'étape 86. En début de recherche de contact, la station d'ordinateur va émettre une longue synchronisation à l'étape 87 suivie d'une trame d'information. Dans cette trame d'information, un champ de synchronisation, dont le nombre d'octets dépend de la valeur d'un compteur de synchronisation est envoyée à l'étape 88 suivie du paquet d'information à l'étape 89 et des octets de remplissage à l'étape 90.

Une fois que les octets de remplissage ont été transmis, les moyens d'émission et/ou de réception de la station sont commutés en mode de réception Rx à l'étape 91. A l'étape 92, la synchronisation de la trame réponse d'une montre est attendue. Dès que la station d'ordinateur reçoit la synchronisation de la trame envoyée par la montre en contact, un compteur de la station opère un comptage du nombre d'octets du champ de synchronisation de la trame reçue à l'étape 93. A la fin du compte des octets reçus du champ de synchronisation à l'étape 94, la station reçoit l'entête de la trame reçue de la montre à l'étape 95. Cette entête comprend une indication de correction du champ de synchronisation d'une trame suivante à émettre depuis la station d'ordinateur. Quand cette indication est à 0, le prochain champ de synchronisation envoyé par la station doit comprendre plus d'octets, alors que lorsque cette indication est à 1, le prochain champ de synchronisation doit comprendre moins d'octets. De ce fait, une variation dynamique du champ de synchronisation est obtenue ce qui définit un des avantages du procédé selon l'invention.

A l'étape 96, un contrôle de validité est effectué concernant l'entête reçue avec le numéro d'identification de la montre qui a répondu. Si l'entête avec le numéro d'identification est correcte, alors une mise à jour du compteur de synchronisation de la station est opérée à l'étape 97 en fonction de l'indication de synchronisation de la trame reçue. Par contre si l'entête avec le numéro d'identification n'est pas correcte, on passe à l'étape 104 d'incrémentation automatique du compteur de synchronisation de la station. Il en est de même à l'étape 92 si la montre n'a pas répondu pendant l'attente de synchronisation. A l'étape 105, l'indication dans l'entête du prochain paquet d'information à envoyer par la station est fixé à l'état 1 de manière à demander une plus longue synchronisation à la montre. Après cette étape 105, un compteur d'erreurs de transmission doit être incrémenté d'une unité à l'étape 101.

Après l'étape de mise à jour du compteur à l'étape 97, la station reçoit l'information utile du paquet d'information terminée par le code de contrôle CRC à l'étape 98. Un contrôle du code de contrôle CRC est opéré à l'étape 99. Si le code de contrôle CRC est correct, on passe à l'étape 106 pour effacer un compteur d'erreurs de transmission et un compteur d'erreurs concernant ce code de contrôle CRC. Par contre si ce code CRC n'est pas correct, alors on incrémente d'une unité le compteur d'erreurs du code CRC à l'étape 100, et d'une unité le compteur d'erreurs de la transmission à l'étape 101.

A l'étape 102, un contrôle du compteur d'erreurs de transmission est effectué. Si le nombre compté d'erreurs de transmission est inférieur une valeur programmée, par exemple inférieur à 3, on passe à l'étape 108 du contrôle du compteur d'erreurs du code CRC. Par contre si le nombre compté d'erreurs de transmission est supérieur à la valeur programmée, on passe à l'étape 103. A cette étape 103, un contrôle concernant la montre questionnée est effectué. Si la montre a déjà été vue lors de la transmission, les erreurs constatées concernent d'une perte de liaison momentanée avec la montre. Par contre si la montre n'a pas encore été vue, la recherche de contact doit être continuée.

Depuis l'étape 106 d'effacement des compteurs d'erreurs, on passe à l'étape 107 pour décrémenter un compteur du nombre de trames à taille réduite des données à transmettre. Lorsque la taille des données transmises est choisie comme une taille réduite, il est en principe compté un certain nombre de trames à taille réduite, par exemple 10 trames, avant d'essayer de transmettre d'autres trames avec une taille de données plus grande par exemple. Après avoir décrémenté ce compteur du nombre de taille réduite, un contrôle du nombre d'erreurs du compteur d'erreurs du code CRC est effectué à l'étape 108. Si le nombre d'erreurs du compteur d'erreurs CRC est supérieur à une valeur maximum programmée, par exemple supérieur à 3, on passe à l'étape 113 qui concerne un contrôle de la longueur des données transmises. Par contre si le nombre d'erreurs du compteur d'erreurs CRC est inférieur à la valeur maximum programmée, on passe à l'étape 109 qui concerne un contrôle du compteur du nombre de trames envoyées à taille réduite.

A l'étape 109, si le compteur du nombre de trames à taille réduite indique 0, cela signifie que le nombre total de trames à taille réduite a été envoyé. Dans ce cas, on passe à l'étape 110 du contrôle de la taille actuelle des données de la trame. Par contre si le compteur du nombre trames à taille réduite n'indique pas 0, on passe directement à l'étape 117 de la commutation des moyens d'émission et/ou de réception en mode d'émission Tx. Depuis cette étape 117, on passe à l'étape 88 pour débuter à nouveau l'envoi d'une nouvelle trame de données à destination de la montre.

A l'étape 110, si la taille actuelle du champ d'information, c'est-à-dire la taille des données, est la taille maximum, par exemple 256 octets, on passe directement à l'étape 117 de commutation des moyens d'émission et/ou de réception de la station en mode d'émission Tx comme décrit ci-dessus. Par contre, si la taille actuelle n'est pas encore la taille maximum, une augmentation de cette taille est faite à l'étape 111, puis on charge le compteur du nombre de trames à taille réduite à l'étape 112. Après cette étape 112, les moyens d'émission et/ou de réception de la station sont commutés en mode d'émission à l'étape 117.

A l'étape 113, un contrôle de la longueur des données transmises est réalisé. Si la longueur des données transmises est à une taille minimum, on passe directement à l'étape 117 de commutation des moyens d'émission et/ou de réception de la station en mode d'émission comme décrit ci-dessus. Par contre, si cette longueur n'est pas à une taille minimum, il s'agit d'effacer le compteur d'erreurs du code CRC à l'étape 114, puis de réduire la taille des données de la prochaine trame à envoyer à l'étape 115. Finalement à l'étape 116, on charge le compteur du nombre de trames à taille réduite avant de passer à l'étape 117 de commutation des moyens d'émission et/ou de réception de la station en mode d'émission comme décrit ci-dessus.

En résumé, les étapes 109 à 112 servent à augmenter la taille des trames si la transmission se déroule sans problèmes, tandis que les étapes 113 à 116 servent à réduire la taille des trames si la transmission est perturbée.

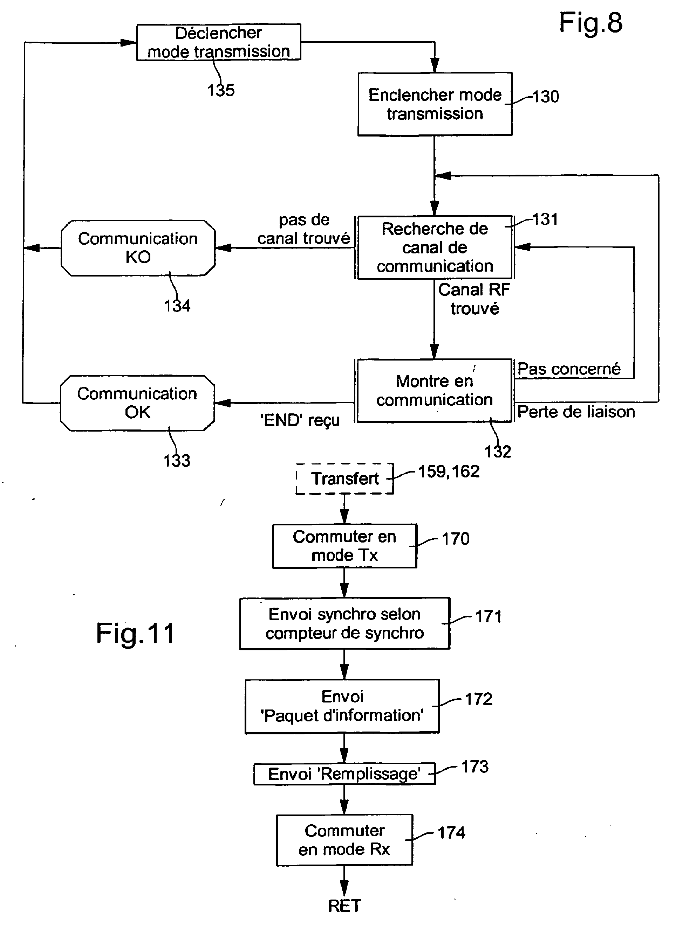

La figure 8 représente un organigramme général d'étapes du procédé de transmission dans la montre. Tout d'abord, une fois qu'un utilisateur se trouve avec sa montre dans la zone d'action de la station d'ordinateur, la station va l'informer de placer sa montre dans le mode de transmission de manière à effectuer une transmission bidirectionnelle d'information selon le numéro d'identification de la montre répertorié dans la station.

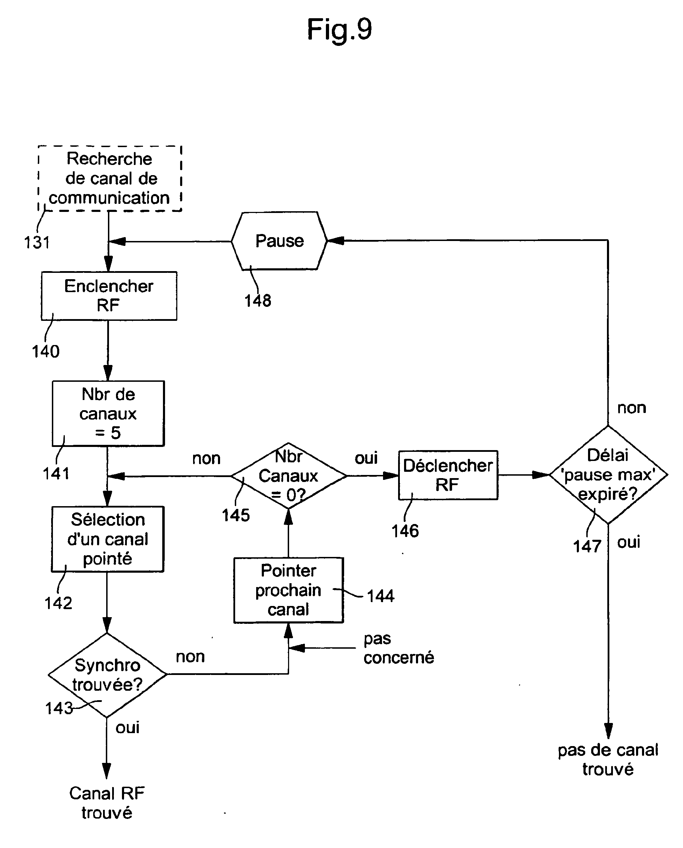

La première étape au niveau de la montre consiste donc à enclencher le mode de transmission de sa fonction agenda à l'étape 130. Si on enclenche le mode de transmission, on cherche immédiatement le canal. La pause de 2,5 sec intervient seulement ensuite si on n'a rien trouvé. Après être entré dans le mode de transmission, la montre doit chercher le canal de transmission sélectionné par la station d'ordinateur à l'étape 131 comme expliqué ci-après à la figure 9. Lors d'un échec de recherche de canal à l'étape 131, suite à de nombreux essais par exemple durant 30 sec, un message s'affiche à l'étape 134 informant qu'il n'y a pas de communication avec la station. La montre sort du mode transmission à l'étape 135.

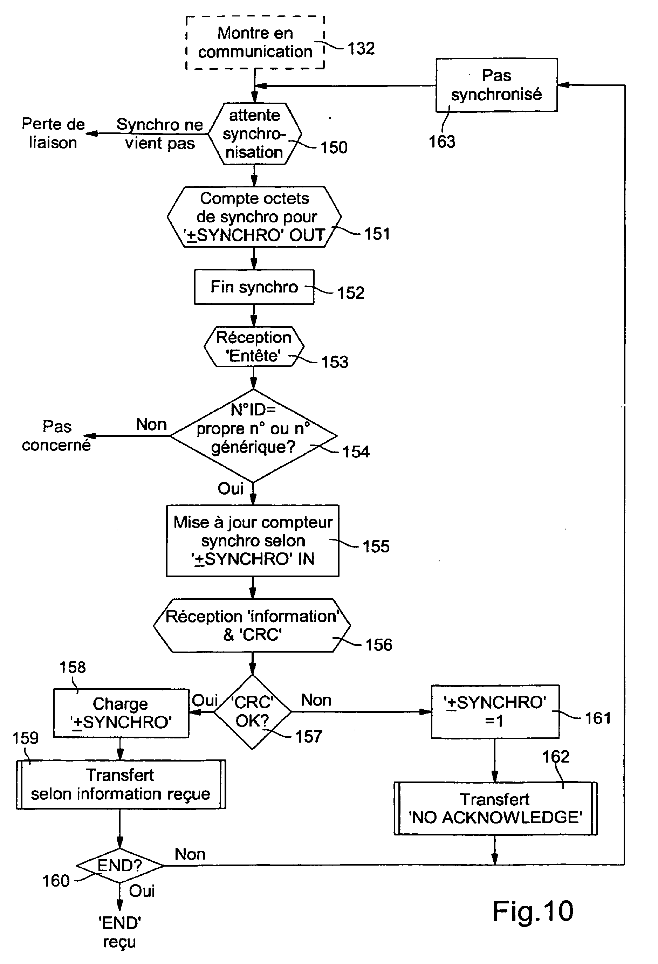

Une fois que le canal de transmission a été trouvé, la montre peut communiquer avec la station d'ordinateur à l'étape 132 comme expliqué ci-après à la figure 10. Lors de la communication avec la station d'ordinateur, il se peut qu'une perte de liaison survienne par exemple si la montre est momentanément éloignée de la zone d'action de la station d'ordinateur. Dans ce cas, on passe à nouveau à l'étape 131 de recherche du canal de transmission. Il se peut également qu'à l'étape 132, le numéro d'identification sur un des canaux de transmission sélectionné (porteuse sélectionnée) par la station ne concerne pas la montre questionnée ce qui renvoie à l'étape 131. Il est possible qu'une communication entre une autre station et une autre montre dans la même zone d'action soit en cours. De ce fait, la montre doit pointer sur un autre canal de transmission à l'étape 131.

A la fin de la transmission de l'information entre la station d'ordinateur et la montre, une trame de fin est transmise dans les deux unités. Ainsi, un message est affiché dans la montre indiquant que la communication s'est bien déroulée à l'étape 133, puis la montre sort du mode transmission à l'étape 135.

A la figure 9, les différentes étapes de recherche du canal de transmission 131 dans la montre sont représentées. La montre doit retrouver le canal ou la porteuse sélectionnée dans la station d'ordinateur pour l'établissement d'une communication avec ladite station. A l'étape 140, les moyens d'émission et/ou de réception de la montre sont enclenchés. Le nombre de canaux est fixé à 5 à l'étape 141, et une sélection d'un canal pointé par le bloc de gestion de la montre, parmi 5 canaux disponibles, est réalisé à l'étape 142. En fonction du canal pointé, la montre essaie de retrouver la synchronisation transmise par la station d'ordinateur. Si la montre arrive à compter des octets de la synchronisation provenant de la station à l'étape 143, cela signifie que la canal de transmission est trouvé. Par contre si la montre n'arrive pas à compter des octets de synchronisation, il est nécessaire de pointer un autre des cinq canaux de transmission à l'étape 144 tout en décrémentant le nombre de canaux.

A l'étape 145, un contrôle du nombre de canaux est opéré. Si ce nombre de canaux n'est pas égal à 0, un retour à l'étape 142 est réalisé avec une sélection d'un autre canal de transmission. Par contre si le nombre de canaux est égal à 0, cela signifie que tous les canaux ont été sélectionnés sans trouver le bon canal de transmission. Les moyens d'émission et/ou de réception de la montre sont déclenchés à l'étape 146 si aucun canal de transmission n'a été trouvé.

A l'étape 147, un contrôle du temps maximum durant lequel la montre est en mode de transmission sans aucune communication, est opéré. Ce temps maximum peut être fixé par exemple à 30 sec. Si ce temps est expiré, cela signifie qu'aucun canal de transmission n'a été trouvé. Par contre, si ce temps n'est pas expiré, la montre se place dans le mode de repos à l'étape 148 qui dure par exemple 2,5 sec avant d'enclencher à nouveau les moyens d'émission et/ou de réception à l'étape 140.

Une fois que la montre a pu se verrouiller sur le canal de transmission, elle entre en communication 132. La figure 10 montre les différentes étapes lors de la communication de la montre avec la station d'ordinateur. Dans un premier temps, la montre attend la synchronisation provenant de la station d'ordinateur à l'étape 150. Il peut s'agir de la longue synchronisation ou d'un champ de synchronisation d'une première trame envoyée par la station d'ordinateur. Après cela, un compteur dans le bloc de gestion de données de la montre compte un certain nombre d'octets du champ de synchronisation de la trame reçue de la station à l'étape 151. En fonction du résultat du compte des octets de synchronisation, une indication de synchronisation, placée dans l'entête d'une prochaine trame sera envoyée de la montre à la station pour corriger la taille d'un prochain champ de synchronisation émis par la station.

A la fin du compte des octets reçus du champ de synchronisation à l'étape 152, la montre reçoit l'entête de la trame provenant de la station à l'étape 153. Cette entête comprend une indication de correction du champ de synchronisation d'une trame suivante à émettre depuis la montre. Quand cette indication est à 0, le prochain champ de synchronisation envoyé par la montre doit comprendre plus d'octets, alors que lorsque cette indication est à 1, le prochain champ de synchronisation doit comprendre moins d'octets. De ce fait, une variation dynamique du champ de synchronisation est obtenue ce qui définit un des avantages du procédé selon l'invention.

A l'étape 154, un contrôle du numéro d'identification ou d'un numéro générique, reçu par la montre, est effectué. Si le numéro d'identification d'une trame transmise par la station d'ordinateur correspond au numéro d'identification de la montre questionnée, alors une mise à jour du compteur de synchronisation est réalisée à l'étape 155. Par contre, si le numéro d'identification ne correspond ni à un numéro générique, ni au numéro d'identification de la montre questionnée, la montre ne doit pas répondre. Dans ce cas en référence à la figure 9, un prochain canal de transmission doit être pointé à l'étape 144.

La mise à jour du compteur de synchronisation à l'étape 155 est fonction de l'indication de synchronisation de la trame reçue de la station d'ordinateur. L'état de cette indication permet de fixer le nombre d'octets de synchronisation d'une prochaine trame à envoyer depuis la montre. Si cette indication vaut 1, le nombre d'octets de synchronisation est augmenté, alors que si cette indication vaut 0, le nombre d'octets de synchronisation est diminué.

A l'étape 156, la montre reçoit l'information utile du paquet de la trame, ainsi que le code de contrôle CRC. Si une erreur de transmission est constatée à l'aide de ce code CRC dans la montre à l'étape 157, une indication de synchronisation est mis à l'état 1 dans une entête de paquet d'une prochaine trame à envoyer depuis la montre à l'étape 161. Ensuite de quoi, un transfert du message de réception incorrecte est fait à l'étape 162. Un retour à l'attente de synchronisation de l'étape 150 est opéré en passant par une étape 163 relative à la non synchronisation de la montre.

Si aucune erreur de transmission a été constatée à l'étape 157, on charge l'indication de synchronisation à l'étape 158, puis des opérations de transfert d'opération sont exécutées à l'étape 159. Comme à la fin d'une transmission complète de l'information, une trame de fin de transmission est envoyée dans chaque unité, un contrôle de la réception de cette trame de fin de transmission est effectué à l'étape 160. Si cette trame est effectivement reçue, une trame similaire est envoyée à la station d'ordinateur avant de déclencher les moyens d'émission et de réception de la montre. Dans le cas contraire, un retour à l'attente de synchronisation d'une prochaine trame provenant de la station d'ordinateur, à l'étape 150, est opéré en passant par une étape 163 d'indication de non synchronisation.

Tous les transferts d'information des étapes 159 et 162 de la montre à la station d'ordinateur sont expliqués en référence à la figure 11. Dans un premier temps, les moyens d'émission et/ou de réception de la montre doivent être commutés du mode de réception Rx au mode d'émission Tx à l'étape 170. Un champ de synchronisation d'une trame est tout d'abord envoyé à la station d'ordinateur à l'étape 171. Le nombre d'octets du champ de synchronisation dépend de la mise à jour du compteur de l'étape 155 à la figure 10 en fonction de l'indication de synchronisation envoyée précédemment par la station d'ordinateur. Après le champ de synchronisation, un paquet d'information est transmis à l'étape 172 dans lequel l'entête comprend une indication de synchronisation pour la correction du prochain champ de synchronisation envoyé par la station d'ordinateur. De plus, l'entête comprend le code du type d'information transmis comme décrit ci-dessus dans les tableaux I et II. A l'étape 173, des octets de remplissage sont envoyés à l'étape 173 pour la commutation des moyens d'émission et/ou de réception. Finalement, les moyens d'émission et/ou de réception sont commutés du mode d'émission Tx au mode de réception Rx pour la prochaine trame à recevoir à l'étape 174.

Le procédé de transmission d'information, qui vient d'être décrit, permet ainsi d'assurer une transmission complète de l'information, par exemple les données mémorisées ou à mémoriser dans une mémoire non volatile de la montre, dans un minimum de temps. En réduisant le temps de transmission de l'information, ainsi que le temps d'enclenchement des moyens d'émission et/ou de réception de la montre, un minimum d'énergie est consommé de la pile ou de l'accumulateur de la montre lors des opérations de transfert d'information. Ainsi, la pile ou l'accumulateur se décharge moins vite que dans un procédé de transmission traditionnel comme expliqué dans la demande de brevet européen EP 0 957 589 au nom de la Demanderesse qui est pris comme référence.

Il est à noter que, lorsque les moyens d'émission et/ou de réception sont enclenchés, la consommation de la montre est quelques milliers de fois supérieure que lorsqu'ils sont déclenchés. De plus lorsque les moyens d'émission et/ou de réception sont enclenchés, la consommation est deux fois plus importante en mode d'émission qu'en mode de réception.

A partir de la description qui vient d'être faite plusieurs variantes de réalisation du procédé de transmission d'information sans fil peuvent être conçues par l'homme du métier sans sortir du cadre de l'invention définie par les revendications. Bien qu'il peut être envisagé une transmission entre deux montres ou entre deux stations d'ordinateur selon le procédé de l'invention, la transmission est de préférence opéré entre une montre personnalisée et une station d'ordinateur. De plus, les signaux transmis par chaque unité sont de préférence des signaux radiofréquences courte-distance, même si d'autres types de signaux, tels que des signaux lumineux ou acoustiques, peuvent être employés selon le procédé de l'invention.

## Revendications

1. Procédé de transmission d'information sans fil entre au moins deux unités constituées de deux stations d'ordinateur ou de deux objets portables personnalisés ou d'un objet portable (1) personnalisé et d'une station d'ordinateur (20), l'objet portable et la station comprenant chacun des moyens d'émission et de réception (2, 13; 24, 26) de signaux pour la transmission bidirectionnelle, dans une zone d'action déterminée, de trames d'information (40) modulées sur une porteuse choisie parmi plusieurs porteuses de transmission disponibles, les moyens d'émission et de réception (2, 13; 24, 26) étant commutés alternativement, lorsqu'ils sont enclenchés, en mode d'émission et en mode de réception des signaux, l'objet portable (1) ayant un bloc de gestion de données (12) relié aux moyens d'émission et/ou de réception (2, 13; 24, 26) pour gérer les trames d'information (40) reçues ou transmises, et une mémoire (11) pour stocker des données, qui est reliée au bloc de gestion de données (12), le procédé comprenant les étapes consistant à :
- transmettre alternativement d'une unité à l'autre unité une trame d'information (40) modulée sur la porteuse sélectionnée, chaque trame comprenant un champ de synchronisation (41) constitué d'un nombre déterminé d'octets de valeur identique, et un paquet d'information (42),
- compter des octets de valeur identique du champ de synchronisation de la trame reçue, et
- comparer le nombre d'octets comptés avec un nombre seuil déterminé de manière à transmettre une indication (49) pour corriger dynamiquement en fonction de la qualité de transmission le nombre d'octets du champ de synchronisation d'une prochaine trame à recevoir.

2. Procédé selon la revendication 1, **caractérisé en ce qu'**il comprend les étapes consistant à :
- transmettre une première trame d'information (40) modulée sur la porteuse sélectionnée de la première unité (20), commutée en mode d'émission, à la deuxième unité (1), la première trame d'information comprenant un champ de synchronisation (41) ayant un premier nombre d'octets de valeur identique qui se suivent, et un paquet d'information (42),
- compter dans la deuxième unité (1), commutée en mode de réception, des octets de synchronisation reçus de la première trame (40),
- comparer dans la deuxième unité (1) le nombre compté d'octets de synchronisation de la première trame (40) avec un nombre seuil déterminé,
- transmettre une deuxième trame d'information (40) modulée sur la porteuse sélectionnée de la deuxième unité (1), commutée en mode d'émission, à la première unité (20), la deuxième trame d'information (40) comprenant un champ de synchronisation (41) ayant un second nombre d'octets de valeur identique qui se suivent, et un paquet d'information (42) dans lequel une entête (44) comprend une indication de correction (49) de synchronisation, cette indication dépendant de la comparaison du nombre compté d'octets de synchronisation de la première trame avec le nombre seuil déterminé, et
- corriger dans la première unité (20), commutée en mode de réception, le premier nombre d'octets de synchronisation en ajoutant ou retirant au moins un octet de synchronisation en fonction de l'indication de correction (49) reçue dans la deuxième trame pour la transmission d'une troisième trame d'information (40) comprenant un champ de synchronisation (41) ayant un troisième nombre d'octets de valeur identique qui se suivent, le troisième nombre d'octets étant différent du premier nombre d'octets.

3. Procédé selon la revendication 2, **caractérisé en ce que** le paquet d'information (42) de la première trame transmise par la première unité (20) comprend une autre indication de correction de synchronisation dans une entête du paquet de la première trame (40), cette autre indication dépendant de la comparaison d'un nombre compté d'octets de synchronisation d'une trame précédente reçue, qui a été transmise par la deuxième unité, avec un autre nombre seuil déterminé, de manière à corriger le deuxième nombre d'octets de synchronisation en ajoutant ou retirant au moins un octet de synchronisation en fonction de l'indication de correction transmise dans la première trame.

4. Procédé selon l'une des revendications 1 et 2 pour lequel la première unité est la station d'ordinateur (20) et la deuxième unité est la montre personnalisée, **caractérisé en ce que**, dans une première phase d'interrogation entre la station d'ordinateur et une montre personnalisée placée dans une zone d'action de ladite station, la station d'ordinateur (20) transmet sur une porteuse sélectionnée une synchronisation de base précédent la première trame d'information, la synchronisation étant d'une période de temps déterminée supérieure à chaque champ de synchronisation de trames d'information, et **en ce que** la montre personnalisée (1) est placée dans un mode de transmission après un temps déterminé suivant le début de la première transmission de la synchronisation de base de la station d'ordinateur, afin de chercher la porteuse sélectionnée par la station d'ordinateur parmi plusieurs porteuses disponibles et se verrouiller sur ladite porteuse sélectionnée quand la montre est capable de compter plusieurs octets identiques de la synchronisation de base.

5. Procédé selon la revendication 4, **caractérisé en ce que** l'entête (44) du paquet d'information (42) de la première trame (40) transmise par la station d'ordinateur (20) comprend le numéro d'identification de la montre (1) à interroger, et **en ce que** la montre personnalisée transmet la deuxième trame d'information à la station d'ordinateur uniquement quand elle a reconnu son numéro d'identification après s'être verrouillée sur la porteuse sélectionnée.

6. Procédé selon la revendication 4, **caractérisé en ce que** la station d'ordinateur (20) transmet plusieurs fois la synchronisation de base et la première trame d'information (40) jusqu'à ce que la montre personnalisée (1) cherchée réponde à la station d'ordinateur.

7. Procédé selon l'une des revendications précédentes, **caractérisé en ce que** l'entête (44) de chaque paquet d'information (42) comprend un code (48) du type d'information transmise à l'objet portable, tel que la montre, ou à la station d'ordinateur, les différents codes transmis dans chaque paquet concernant la lecture des données de la mémoire non volatile (11) de la montre, l'écriture de données dans ladite mémoire, la demande du numéro d'identification de la montre, des messages de la réception ou non de l'information transmise, une information sur la taille des données transmises, une information sur la fin de la transmission d'information.

8. Procédé selon l'une des revendications précédentes, **caractérisé en ce que** la station d'ordinateur (20) adapte la taille de l'information de chaque paquet en fonction d'un nombre d'erreurs de transmission comptés supérieur à un nombre d'erreurs admis par un compteur d'erreurs de la station d'ordinateur.

9. Procédé selon la revendication 4, **caractérisé en ce que** la station d'ordinateur (20) transmet dans l'entête (44) du paquet d'information (42) de la première trame d'information un numéro générique pour permettre à tout objet portable, tel qu'une montre personnalisée (1) non identifiée, dans la zone d'action de la station d'ordinateur de transmettre en réponse son numéro d'identification personnel, et **en ce que** la station d'ordinateur enregistre le numéro d'identification de la montre personnalisée qui a répondu.

## Patentansprüche

1. Verfahren zur drahtlosen Übertragung von Informationen zwischen zumindest zwei Einheiten, die von zwei Rechnerstationen oder von zwei persönlichen portablen Objekten oder von einem persönlichen portablem Objekt (1) und einer Rechnerstation (20) gebildet sind, wobei das portable Objekt und die Station jeweils Signalsende- und Signalempfangsmittel (2,13; 24, 26) für die bidirektionale Übertragung in einer bestimmten Übertragungszone (40) sowie Informationsrahmen (40) aufweisen, die auf einen Träger aufmoduliert sind, der aus einer Vielzahl erhältlicher Übertragungsträger ausgewählt wurde, wobei die Sende- und Empfangsmittel (2,13; 24, 26) alternierend geschaltet sind, wenn sie in einem Sendemodus und in einem Signalempfangsmodus einrasten, wobei das portable Objekt (1) einen Datenverwaltungsblock (12) aufweist, der mit den Sende- und/oder Empfangsmitteln (2, 13; 24, 26) der empfangenen oder versendeten Informationsrahmen (40) verbunden ist und einen Speicher (11) zum Speichern der Daten aufweist, der mit dem Datenverwaltungsblock (12) verbunden ist, wobei das Verfahren die Schritte aufweist, die darin bestehen:
- alternatives Übermitteln eines Informationsrahmens (40) von einer Einheit an die andere Einheit, welcher auf dem ausgewählten Träger moduliert ist, wobei jeder Rahmen ein Synchronisationsfeld (41) aufweist, welches aus einer bestimmten Anzahl identischer Bytes und einem Informationspaket (42) gebildet ist,
- Zählen der identischen Bytes des Synchronisationsfeldes des empfangenen Rahmens, und
- Vergleichen der Anzahl der gezählten Bytes mit einem bestimmten Schwellwert, um einen Hinweis (49) zum dynamischen Korrigieren der Anzahl der Bytes des Synchronisationsfeldes eines nachfolgend zu empfangenden Rahmens als Funktion der Qualität der Übermittlung zu übermitteln.

2. Verfahren nach Anspruch 1, **dadurch gekennzeichnet, dass** es die Schritte aufweist, die darin bestehen:
- Übermitteln eines ersten Informationsrahmens (40), welcher auf dem ausgewählten Träger der ersten, in einen Sendemodus geschalteten Einheit (20) moduliert ist, an die zweite Einheit (1), wobei der erste Informationsrahmen ein Synchronisationsfeld (41), mit einer ersten Anzahl identischer aufeinander folgender Bytes und ein Informationspaket (42) aufweist,
- Zählen der vom ersten Informationsrahmen (40) empfangenen Synchronisationsbytes in der zweiten, in den Empfangsmodus geschalteten Einheit (1),
- Vergleichen der gezählten Synchronisationsbytes des ersten Rahmens (40) mit einem bestimmten Schwellwert in der zweiten Einheit (1),
- Übermitteln eines zweiten Informationsrahmens (40), welcher auf dem von der zweiten, in den Sendemodus geschalteten Einheit (1) gewählten Träger moduliert ist, an die erste Einheit (20), wobei der zweite Informationsrahmen (40) ein Synchronisationsfeld (41) mit einer zweiten Anzahl aufeinander folgender identischer Bytes und ein Informationspaket (42) aufweist, in welchem ein Kopf (44) einen Korrekturhinweis (49) zur Synchronisation aufweist, wobei der Hinweis vom Vergleich der gezählten Anzahl der Synchronisationsbytes des ersten Rahmens mit dem bestimmten Schwellwert abhängt, und
- Korrigieren der ersten Anzahl der Synchronisationsbytes in der ersten, in den Empfangsmodus geschalteten Einheit (20) durch Hinzufügen oder Abziehen von zumindest einem Synchronisationsbyte als Funktion des Korrekturhinweises (49), welcher im zweiten Rahmen zur Übermittlung eines dritten Informationsrahmens (40) erhalten wurde, welcher ein Synchronisationsfeld (41) mit einer dritten Anzahl identischer aufeinander folgender Bytes aufweist, wobei sich die dritte Anzahl der Bytes von der ersten Anzahl der Bytes unterscheidet.

3. Verfahren nach Anspruch 2, **dadurch gekennzeichnet, dass** das Informationspaket (42) des ersten, über die erste Einheit (20) übermittelten Rahmens in einen Kopf des ersten Rahmens (40) eine andere Synchronisationskorrekturkennzeichnung aufweist, wobei jene andere Kennzeichnung von einem Vergleich der Anzahl gezählter Synchronisationsbytes eines vorherigen empfangenen Rahmens abhängt, welcher über die zweite Einheit mit einem anderen bestimmten Schwellwert derart übertragen wurde, um die zweite Anzahl an Synchronisationsbytes durch Hinzufügen oder Abziehen zumindest eines Synchronisationsbytes als Funktion des im ersten Rahmen übertragenen Korrekturhinweises zu korrigieren.

4. Verfahren nach einem der Ansprüche 1 und 2, wobei die erste Einheit die Rechnerstation (20) und die zweite Einheit die persönliche Uhr ist, **dadurch gekennzeichnet, dass** in einer ersten Abfragephase zwischen der Rechnerstation und der persönlichen, in einer Aktivierungszone der genannten Station platzierten Uhr, die Rechnerstation (20) über einen ausgewählten Träger eine Basissynchronisation vor dem ersten Informationsrahmen überträgt, wobei die Synchronisation über einen Zeitraum stattfindet, der größer als jedes Synchronisationsfeld der Informationsrahmen ist, und wobei die persönliche Uhr (1) nach einer bestimmten, dem Beginn der ersten Übermittlung der Basissynchronisation der Rechnerstation folgenden Zeit in einen Transmissionsmodus gesetzt wird, um die von der Rechnerstation unter einer Vielzahl erhältlicher Träger ausgewählten Träger zu suchen und sich auf dem ausgewählten Träger zu verriegeln, wenn die Uhr zum Zählen mehrerer identischer Basissynchronisationsbytes fähig ist.

5. Verfahren nach Anspruch 4, **dadurch gekennzeichnet, dass** der Kopf (44) des ersten, über die Rechnerstation (20) übermittelten Rahmens (40) die Identifikationsnummer der abzufragenden Uhr (1) aufweist und wobei die persönliche Uhr den zweiten Informationsrahmen einzigartig an die Rechnerstation übermittelt, wenn sie ihre Identifikationsnummer erkannt hat, nachdem sie sich auf dem ausgewählten Träger verriegelt hat.

6. Verfahren nach Anspruch 4, **dadurch gekennzeichnet, dass** die Rechnerstation (20) mehrmals die Basissynchronisation und den ersten Informationsrahmen (40) übermittelt, bis die gesuchte persönliche Uhr (1) der Rechnerstation antwortet.

7. Verfahren nach einem der vorhergehenden Ansprüche, **dadurch gekennzeichnet, dass** der Kopf (44) eines jeden Informationspakets (42) einen Code (48), der an das portable Objekt, wie z. B. die Uhr oder an die Rechnerstation übertragene Informationen enthält, wobei die unterschiedlichen übermittelten Codes in jedem Paket das Lesen der Daten des nicht flüchtigen Speichers (11) der Uhr, das Schreiben der Daten in den besagten Speicher, die Abfrage der Identifikationsnummer der Uhr, Nachrichten des Erhalts oder Nichterhalts von übermittelten Informationen, eine Information über die Größe der übermittelten Daten, eine Information über das Ende der Übertragung der Informationen betreffen.

8. Verfahren nach einem der vorhergehenden Ansprüche, **dadurch gekennzeichnet, dass** die Rechnerstation (20) die Größe der Informationen eines jeden Pakets als Funktion einer Anzahl der gezählten Übertragungsfehler ist, die größer sind, als die von einem Fehlerzähler der Rechnerstation angenommenen Fehler.

9. Verfahren nach Anspruch 4, **dadurch gekennzeichnet, dass** die Rechnerstation (20) in den Kopf (44) des Informationspakets (42) des ersten Informationsrahmens eine generische Nummer übermittelt, um es jedem portablen Objekt, wie z.B. einer persönlichen nichtidentifizierten Uhr (1) zu ermöglichen, in der Aktionszone der Rechnerstation mit Übermittlung ihrer persönlichen Identifikationsnummer zu antworten und wobei die Rechnerstation die Identifikationsnummer der persönlichen Uhr, welche geantwortet hat, registriert.

## Claims

1. Method of wireless transmission of information between at least two units consisting of two computer stations or two personalised portable objects or a personalised portable object (1) and a computer station (20), the portable object and the station each having signal transmitting and receiving means (2, 13; 24, 26) for bi-directional transmission, within a particular coverage area, of information frames (40) modulated onto a carrier selected from a plurality of available transmission carriers, the transmitting and receiving means (2, 13; 24, 26) being switched alternately, when they are activated, to a signal transmitting mode and a signal receiving mode, the portable object (1) including a data management unit (12) connected to the transmitting and receiving means (2, 13; 24, 26) to manage received or transmitted information frames (40) and a memory (11) for storing data which is connected to the data management unit (12), which method includes the following steps:
- transmitting alternately from one unit to the other unit an information frame (40) modulated onto the selected carrier and including a synchronisation field (41), which consists of a particular number of bytes of identical value, and an information packet (42);
- counting bytes of identical value in the synchronisation field of the received frame, and
- comparing the number of bytes counted with a particular threshold number to transmit an indication (49) for correcting dynamically as a function of the transmission quality the number of bytes in the synchronisation field of the next frame to be received.

2. Method according to claim 1, **characterised in that** it includes the steps of:
- transmitting from the first unit (20), when switched to the transmitting mode, to the second unit (1) a first information frame (40) modulated onto the selected carrier and including a synchronisation field (41), which includes a first number of bytes of identical value in succession, and an information packet (42);
- counting in the second unit (1), when switched to the receiving mode, synchronisation bytes received in the first frame (40);
- comparing in the first unit (1) the counted number of synchronisation bytes in the first frame (40) with a particular threshold number;
- transmitting from the second unit (1), when switched to the transmitting mode, to the first unit (20) a second information frame (40) modulated onto the selected carrier and including a synchronisation field (41), which includes a second number of bytes of identical value in succession, and an information packet (42) including a heading (44) which includes a synchronisation correction indication (49) depending on the comparison of the counted number of synchronisation bytes in the first frame with the particular threshold number, and
- correcting in the first unit (20), when switched to the receiving mode, the first number of synchronisation bytes by adding or subtracting at least one synchronisation byte as a function of the correction indication (49) received in the second frame in order to transmit a third information frame (40) including a synchronisation field (41) including a third number of bytes of identical value in succession, the third number of bytes being different from the first number of bytes.

3. Method according to claim 2, **characterised in that** the information packet (42) in the first frame transmitted by the first unit (20) includes, in a heading of the packet of the first frame (40), another synchronisation correction indication depending on the comparison of a counted number of synchronisation bytes in a preceding received frame, which was transmitted by the second unit, with another particular threshold number, in order to correct the second number of synchronisation bytes by adding or subtracting at least one synchronisation byte as a function of the correction indication transmitted in the first frame.

4. Method according to any of claims 1 and 2, wherein the first unit is the computer station (20) and the second unit is the personalised watch, **characterised in that**, in a first interrogation phase conducted between the computer station and a personalised watch located in a coverage area of said station, the computer station (20) transmits on a selected carrier a basic synchronisation signal preceding the first information frame, the synchronisation signal occupying a particular time period longer than each information frame synchronisation field, and **in that** the personalised watch (1) is switched to a transmission mode after a particular time following the start of the first transmission of the basic synchronisation signal from the computer station in order to search for a carrier selected by the computer station from a plurality of available carriers and to lock onto said selected carrier when the watch is able to count a plurality of identical bytes of the basic synchronisation signal.

5. Method according to claim 4, **characterised in that** the heading (44) of the information packet (42) in the first frame (40) transmitted by the computer station (20) includes the identification number of the watch (1) to be interrogated and **in that** the personalised watch transmits a second information frame to the computer station only when it has recognised its identification number after locking onto the selected carrier.

6. Method according to claim 4, **characterised in that** the computer station (20) transmits the basic synchronisation signal and the first information frame (40) repeatedly until the personalised watch (1) searched for responds to the computer station.

7. Method according to any preceding claim, **characterised in that** the heading (44) of each information packet (42) includes a code (48) indicative of the type of information transmitted to the portable object, such as the watch, or to the computer station, the codes transmitted in each packet concerning reading data from the non-volatile memory (11) of the watch, writing data in said memory, requesting the identification number of the watch, messages concerning reception or non-reception of the information transmitted, information on the size of the data transmitted, and information on the end of the transmission of information.

8. Method according to any preceding claim, **characterised in that** the computer station (20) adapts the size of the information in each packet as a function of a number of transmission errors counted by an error counter of the computer station greater than a permitted number of errors.

9. Method according to claim 4, **characterised in that** the computer station (20) transmits a generic number in the heading (44) of the information packet (42) of the first information frame to enable any portable object, such as an unidentified personalised watch (1), in the coverage area of the computer station to respond by transmitting its personal identification number, and **in that** the computer station stores the identification number of the personalised watch that has responded.
